# EUROPEAN PATENT SPECIFICATION

(11) **EP 3 320 244 B1**
(45) Date of publication and mention of the grant of the patent: **15.05.2019**
(21) Application number: 16745523.7
(22) Date of filing: 28.06.2016
(51) Int. Cl.: F16L 1/20

(54) **END FITTING HANDLING IN A MARINE PIPELINE INSTALLATION SYSTEM**
HANDHABUNG EINES ANSCHLUSSSTÜCKS IN EINEM UNTERWASSERPIPELINE-INSTALLATIONSSYSTEM
MANIPULATION D'EMBOUT DANS UN SYSTÈME D'INSTALLATION DE PIPELINE MARIN

(30) Priority: 10.07.2015 NL 2015142
(43) Date of publication of application: 16.05.2018
(73) Proprietor: Itrec B.V., 3115 HH Schiedam (NL)
(72) Inventor: BRINKMAN, Marc Louis, 3115 HH Schiedam (NL); ROODENBURG, Joop, 3115 HH Schiedam (NL)
(74) Representative: EP&C
(86) International application number: PCT/NL2016/050457
(87) International publication number: WO 2017/010868

(56) References cited:
- WO-A1-2007/108673
- WO-A1-2014/148907
- GB-A- 2 509 597

## Description

The present invention relates to the handling of end fittings on a flexible pipeline in a marine pipeline installation system for laying an offshore pipeline and/or installing a subsea riser.

In the field of subsea pipeline installation flexible pipelines commonly do not require straightening after passage thereof over an arctuate pipeline guide as the deformation of the pipeline is well within the elastic range of the pipeline. In embodiments the flexible pipeline is manufactured by wrapping of intertwining layers of high strength stainless steel and polymers. In contrast rigid pipelines are commonly carbon steel pipe which, after passing the pipeline guide, is subjected to a straightening of the pipeline by a straightener assembly in order to compensate for plastic deformation.

WO 2007/108673 discloses a marine pipeline installation system for laying an offshore pipeline and/or installing a subsea riser. This system comprises a storage reel for storage of the pipeline to be installed and a launch tower which is adapted for launching the pipeline in a firing line into the sea. A pipeline guide, shown in the figures embodied as a semi-circular chute, is mounted at an elevated position of the launch tower and provides a semi-circular arctuate guide surface that extends in a vertical plane for guiding the pipeline from the storage reel into the firing line. One or more tensioners are mounted on the launch tower below the pipeline guide and serve to pay out the pipeline into the sea, whilst supporting the weight of the launched pipeline. An abandonment and recovery (A&R) system is provided which comprises an A&R cable and an associated A&R winch as well as a sheave arrangement with A&R sheaves supported by the launch tower above the one or more tensioners.

Whereas steel pipe rigid pipelines are commonly interconnected directly by welding, flexible pipelines for reel-laying are commonly provided during their production with special end fittings, in particular with end connector fittings that allow to connect a flexible pipeline to another flexible pipeline or other subsea equipment. In many embodiments the end connector fitting comprises a part that serves as the actual connector and a bend restrictor that prevents excessive bending near the actual connector part. The actual connector part e.g. includes a flange or a Grayloc connector. An end fitting present at the leading end of the pipeline, which end will enter into the sea first, is commonly identified as a first end fitting. An end fitting present at the trailing end of the pipeline, which enters into the sea last, is commonly identified as a second end fitting. Therefore a flexible pipeline may have a first end connector fitting and a second end connector fitting.

As is known in the field end connector fittings have a larger diameter than the flexible pipeline and have a different bending behaviour. In general end connector fittings are much stiffer than the flexible pipeline.

When unspooling a flexible pipeline provided with a first end connector fitting from a storage reel, the first end connector fitting has to be passed over the pipeline guide in order to then lower the first end connector fitting in the firing line and then engage the pipeline with the one or more tensioners.

It is known in the field to handle an end connector fitting by means of a relatively small service crane, e.g. a knuckleboom crane, that is mounted on the launch tower near the pipeline guide. The end fitting is then hooked up to the service crane and a crane operator carefully manoeuvres the end fitting so that it passes in a path over and about the arctuate guide surface of the pipeline guide so as to reach a position aligned with the firing line. An example hereof is shown in WO02/057675. Commonly, personnel is required to assist the transfer at the upper end of the pipeline launch tower.

In WO2014/120004, with reference to figures 9 - 11, a known approach for handling a second end connector fitting on a flexible pipeline is disclosed. The service crane near the pipeline guide is used to pass the second end connector fitting over the pipeline guide into the firing line. Then the second end connector fitting is attached, via the end fitting adapter, to a trolley suspended from the A&R system for further lowering the second end connector along the launch tower with the tensioners in a retracted position thereof so that the trolley can pass the retracted tensioners.

The use of a service crane for handling an end fitting on a flexible pipeline places stringent requirements on the skills and experience of the service crane operator and is therefore less desirable, taking into account that the pipeline guide is at a rather great height and therefore sea-motions of the vessel may have a major impact on such an operation.

It is an object of the present invention to provide a marine reel lay method pipeline installation system with an end fitting handling crane that is able to handle an end fitting on a flexible pipeline in an efficient and controlled manner.

The present invention provides a marine pipeline installation system according to claim 1.

The system allows for controlled handling of an end fitting, e.g. end connector, with ease and reliability, e.g. in view of avoiding any or undue interference of the end fitting with the pipeline guide and/or undue loads on the end fitting and/or on the pipeline in the handling and transfer process, and/or in view of avoiding the risks associated with personnel assisting the transfer of the end fitting at the upper end of the pipeline launch tower.

According to the invention, the end fitting handling crane comprises a pedestal mounted to an upper end of the pipeline launch tower and a base which is rotatably connected to the pedestal about a vertical rotation axis with a base drive. It is noted that the base is sometimes also referred to as crane housing. In embodiments, the base drive is provided with an anti-backlash design. The presence of play or clearance in the slewing of the base relative to the pedestal will adversely affect the accuracy of the control of the slewing motion.

A boom assembly is attached to the base, comprising a main boom having an inner end which is pivotably connected to the base about a first horizontal pivot axis , and a jib having an inner end which is pivotably connected to the main boom about a second horizontal pivot axis. A main boom drive and jib drive are provided to effect the pivoting movements. The end fitting handling crane is possibly embodied as a knuckleboom crane. A retainer is provided at an outer end of the jib to which the end fitting on the flexible pipeline is connectable.

According to the invention, a computerized crane control system is provided which is linked to the base drive, the main boom drive and the jib drive, and which is adapted to control the end fitting handling crane, in particular the slewing of the base relative to the pedestal, the pivoting of the main boom relative to the base and the pivoting (luffing) of the jib relative to the main boom. Advantageously, multiple or all of the drives can be operated simultaneously. Hence, the control system is able to control at least these movements of the end fitting handling crane, and thereby control movements of the retainer and of an end fitting connected to the retainer.

The computerized control system is in particular programmed to perform a first routine providing a pattern of movements of the base, main boom and jib, the pattern extending between an end fitting pick up position wherein the outer end of the jib is arranged at the storage reel side of the pipeline guide and the firing line. Performing this first routine results in automatically transferring the end fitting from a storage reel side of the pipeline guide, over the pipeline guide into the firing line in an end fitting trajectory. In embodiments, a routine of the computerized crane control system also includes lowering the end fitting at least partially into the firing line.

Hence, the movements of base, main boom and jib are all pre-programmed and automatically performed. Furthermore, an input device is provided which is linked to the computerized crane control system, which is provided at a position remote from the upper end of the pipeline launch tower, and which is adapted to receive a command to start the first routine of the computerized crane control system.

The 'start' command to perform the first routine to automatically transfer the end fitting is given to the input device, which is advantageously provided at the bridge of the vessel. An advantage of the computerized crane control system and remote input device is that no personnel is required at the upper end of the launch tower. Another advantage may be the required time: as the transfer is automated, the time to transfer an end fitting may be reduced.

In embodiments, the computerized crane control system comprises a memory in which multiple routines with different patterns of movement are stored, wherein a routine is selected on the basis of the command entered into the input device. For example, different routines are stored for a leading, first end fitting, and a second, trailing end fitting. Also, the routine may depend on the dimensions of the end fitting. Hence, the input device may not only be adapted to receive a 'start' command, but also further information such as the type of end fitting and/ or the dimensions of the end fitting.

The transfer of a second end fitting is preceded by laying the flexible pipeline from the storage reel, over the pipeline guide into the firing line and on the seabed. This pipelaying process is controlled by the tracks of one or more tensioners engaging the pipeline in the firing line and supporting at least part of the weight of the launched pipeline during launching the offshore pipeline.

Tensioners are well known in the art of marine pipelaying. Commonly such tensioners include a tensioner frame and multiple, e.g. four endless tracks supported in a mobile manner in the frame to allow for variation of the gap between the tensioner to at least accommodate various pipeline diameters.

As is also common in the art the tensioner tracks here each form part of a track unit including a robust chassis, support rollers or other bearing means mounted therein for the endless track (not shown), and one more track drive/brake members (e.g. a hydraulic motor) for effecting drive and/or braking motion of the track.

Advantageously, the computerized crane control system is linked to such track drive/brake members operating the tracks of the tensioner. As such, it is possible to control at least the speed of second end fitting upon arrival at the end fitting pick up position.

In embodiments, the jib of the boom assembly is a telescopic jib, wherein the outer end of the jib is telescopable relative to the inner end of the jib by a telescope drive to which the computerized crane control system is linked, and wherein a routine of the computerized crane control system includes telescoping of the jib. As such, an additional movement may be added to the pattern of movements to automatically transfer the end fitting in an end fitting trajectory. It is conceivable that the computerized crane control system includes simultaneous operation of the base drive and/ or the boom drive and/ or the jib drive and the telescopic drive. In embodiments, it is also conceivable that telescoping the jib is applied to lower the end fitting at least partially into the firing line.

In embodiments, the end fitting handling crane further comprises a winch and a wire extending over a sheave at the outer end of the jib to the retainer, wherein the computerized crane control system is also linked to the winch and wherein a routine of the computerized crane control system includes hauling and/ or paying out the wire. As such, yet an additional movement may be added to the pattern of movements to automatically transfer the end fitting in an end fitting trajectory. It is conceivable that the computerized crane control system includes simultaneous operation of the base drive and the winch. In embodiments, it is conceivable the winch is operated at the beginning of the pattern of movements, at the end fitting pick up position, to assist in picking up the end fitting. For example, it is possible that the wire is lowered to the level of the storage reel, to pick up a leading, first end fitting directly from the reel. Possibly, the winch is also operated during the transfer of the end fitting over the pipeline guide. Simultaneous operation of the base drive and/or the boom drive and/ or the jib drive and the winch is possible during the transfer of the end fitting. In embodiments, it is possible that the winch is operated at the firing line, to lower the end fitting at least partially into the firing line. In such embodiments the wire has a length sufficient to pick up a flexible pipeline end fitting from deck, and/ or lower it through the tensioners.

In embodiments, the end fitting handling crane further comprises a load sensor measuring the force exerted by end fitting onto the retainer. This load sensor is connected to the computerized crane control system, and an output signal of the load sensor is used as input for a routine of the computerized crane control system. Hence, it is possible to maintain a constant force during the transfer of the end connector, e.g. by controlling the slewing and pivoting movements. As such, it is possible to maintain a certain rigidity during the transfer.

In embodiments, further an imaging device may be provided in the vicinity of the pipeline guide, such as a normal or infrared camera. The imaging device is advantageously linked to the computerized crane control system, allowing the output of the imaging device, possibly with the aid of image recognition software, to be used as input for a routine of the computerized crane control system.

In embodiments, as is known in the field, the installation further comprises a back tension sheave and/ or back tension winch that is mounted or is to be mounted at a deck of the vessel, generally at the storage reel side of the pipeline launch tower, remote from the firing line. Said back tension sheave, in the transfer of a second end fitting, guides a winch driven cable connected to the second end fitting and allows to apply back tension on the second connector, e.g. just during lifting from the deck or even during said transfer over the pipeline guide. This allows to avoid that the second end fitting will sway in undue manner as it is raised towards the guide.

In an embodiment according to the present invention, the computerized crane control system is also linked to the back tension sheave and/or back tension winch and a routine of the computerized crane control system in the transfer of a second end fitting includes applying back tension. In this embodiment it is in particular advantageous if the computerized crane control system is not only linked to the back tension sheave and/ or back tension winch but also to a tensioner track drive to accurate control the movements of the second end fitting, in particular at the end fitting pick up position and during the transfer of the second end fitting over the pipeline guide in an end fitting trajectory.

In embodiments, as is known in the field, the pipeline guide surface may be circular, e.g. embodied as a rotating circular wheel often called an aligner wheel or diverter wheel.

In other embodiments the pipeline guide surface is semi-circular, e.g. as in a chute. The guide surface may be formed, in embodiments, by a series of rollers in a semi-circular arrangement. In other embodiments the pipeline guide includes a continuous belt or track providing the arctuate guide surface, e.g. a semi-circular guide surface, e.g. in combination with stationary gutter flanks.

In embodiments, as is known in the field, the installation further comprises a guide support structure supporting the pipeline guide, which guide support structure is mounted movable to the pipeline launch tower, and wherein a guide support structure drive is provided to allow adjustment of the position of the guide support structure, moving the pipeline guide towards and away from the firing line. Adjustment of the position also includes adjustment of the orientation of the guide support structure.

In an embodiment according to the present invention, the computerized crane control system is further linked to the guide support structure drive, and wherein a routine of the computerized control system includes adjusting the position of the guide support structure during transfer of the end fitting.

In embodiments, as is known in the field, the at least one tensioner frame with tensioner tracks is supported via an associated support assembly, the support assembly of one or more tensioner frames being adapted to allow for displacement of the tensioner frame with respect to the tower between the pipelaying position and an end fitting passage position by a tensioner drive.

The displacement of the tensioner frame can for example be achieved by displacing the tensioner frame in its entirety, e.g. retracting it into the direction of the pipeline launch tower, e.g. such as disclosed in WO2007/108673. Hence, the tensioner in its retracted position is held in a shape corresponding to the tension in the active position. In the retracted position, the pipeline launch trajectory then thus extends outside and spaced from said retracted tensioner frame. In a possible embodiment, the tower comprises two spaced apart main beams interconnected by a number of cross beams and wherein the one or more tensioners in their retracted position are located at least partly between said main beams, wherein preferably a cross beam is positioned below and above each tensioner.

On the other hand, it is also conceivable that the support assembly allows for a relative displacement of portions of the tensioner frame, thus allowing the frame to 'open'. For example, the support assembly may allow for displacement of a part of the tensioner frame comprising one or two tracks, away from another part of the tensioner frame comprising the remaining tracks. This may be seen as the 'opening of two arms'. In a possible embodiment the tensioner frame has an annular structure having at least one hinged frame part which can be moved between a 'closed position', wherein the annular frame structure forms a closed annulus, and an 'opened position', wherein the one or more hinged parts create a lateral opening in the frame structure over the height thereof, creating a clear envelope.

In an embodiment according to the present invention, the computerized crane control system is further linked to the tensioner drive, and a routine of the computerized control system includes displacing the tensioner frame to the end fitting passage position. The displacement allows for passage of a first and/or second end fitting in the firing line.

Commonly, as indicated above, the tensioner tracks are supported in a mobile manner in the frame to allow for variation of the gap between the tensioner tracks to at least accommodate various pipeline diameters. In embodiments, the mobility of the tensioner tracks may allow moving the tensioner tracks away from the firing line to an end fitting passage position in which passage of an end fitting between the tensioner tracks is possible. The mobility of the tensioner tracks is e.g. provided by a tensioner track movement drive, to which, according to an embodiment of the present invention the computerized crane control system is further linked. A routine of the computerized control system may also include retracting the tensioner tracks to the end fitting passage position when lowering the end fitting in the firing line.

The system may further comprise an abandonment and recovery (A&R) system adapted to raise, lower and support the weight of the launched pipeline in the firing line, comprising at least one A&R cable and associated A&R winch and a sheave arrangement with one or more A&R sheaves supported by the launch tower above said one or more tensioners. The A&R system may be applied to lower the end fitting in the firing line, after the transfer of the end fitting over the pipeline guide.

In embodiments of the invention, the computerized crane control system is also linked to the A&R system, e.g. to the A&R winch. As such, a routine of the computerized control system includes controlling the A&R winch, allowing for example to automatically control the transfer of end fitting from the end fitting handling crane to the A&R system.

In an embodiment the launch tower is provided with an auxiliary trolley adapted to support the weight of the launched pipeline and suspended from the A&R cable, which trolley is movable along rails along the firing line when the one or more tensioner frames are in a retracted non-operable position, from a position above the uppermost tensioner to a position below the lowermost tensioner, the rail being supported by the launch tower.

Advantageously the trolley is provided with a retainer that is engageable with a pipeline end fitting.

The invention also relates to a flexible offshore pipeline end fitting transfer mechanism as described herein.

The invention also relates to a pipelaying vessel provided with a system of the present invention, e.g. the vessel having a hull and a moonpool and the launch tower, e.g. tiltable or non-tiltable, being arranged on the hull so that the launched pipeline passes through the moonpool into the sea.

The invention also relates to a marine reel lay method for launching on the seabed a flexible offshore pipeline with one or two end fittings, wherein use is made of the system as explained herein.

In an embodiment, the invention relates to a marine reel lay method for laying on the seabed a flexible offshore pipeline comprising at least a second, trailing end fitting connected thereto, wherein use is made of a system according to claim 1, the method comprising the steps of:
- launching the offshore pipeline into the sea, from a storage reel via the pipeline guide into the firing line, by operating the one or more tensioners, with the tensioner tracks engaging the pipeline in the firing line and supporting at least part of the weight of the launched pipeline;
- bringing the second end fitting within reach of a retainer at the end fitting pick up position;
- connecting the second end fitting to the retainer;
- entering a command into the input device of the computerized crane control system to automatically transfer the second end fitting from the storage reel side of the pipeline guide, over the pipeline guide into the firing line in an end fitting trajectory,
- lowering the second end fitting and the launched flexible pipeline connected upstream thereof into the firing line.

The invention will now be discussed with reference to the drawings. In the drawings:
Fig. 1 illustrates - in a perspective view - a part of pipelaying vessel equipped with an exemplary marine pipeline installation system for laying an offshore pipeline;
Fig. 2 illustrates - in a perspective view - a part of pipelaying vessel equipped with an alternative exemplary marine pipeline installation system for laying an offshore pipeline;
Figs. 3a-3g illustrate - in a highly schematic perspective view - a marine reel lay method for laying a pipeline comprising a second end fitting connected thereto.

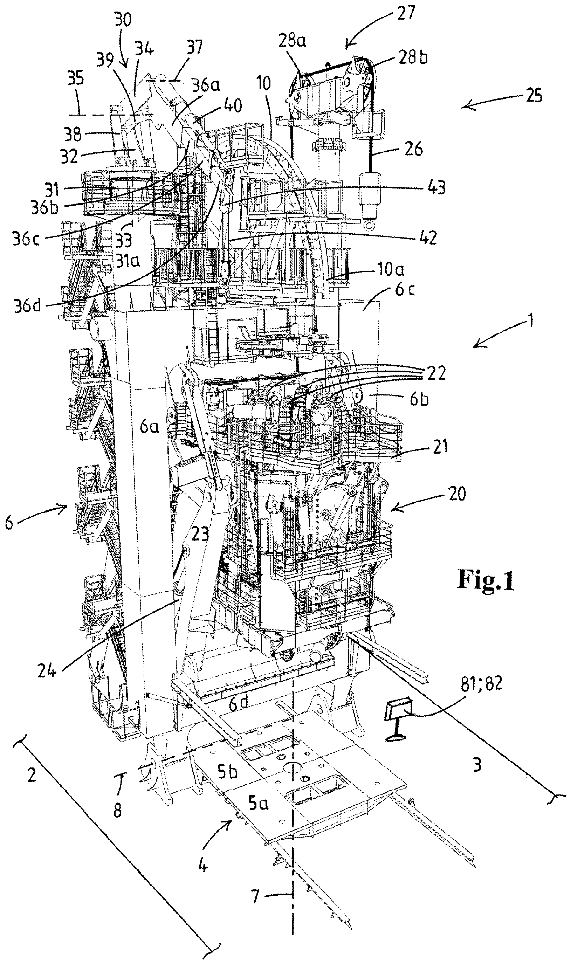

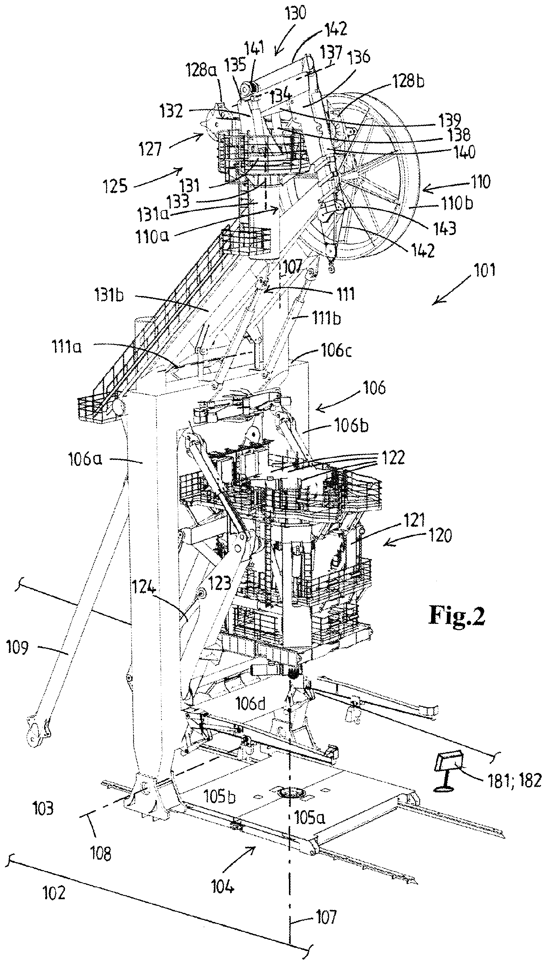

In fig. 1 a first embodiment of a marine reel lay method pipeline installation system 1 according to the present invention is shown. In fig. 2, a second embodiment of a marine pipeline installation system 100 according to the invention is shown, similar to the first embodiment of fig. 1. Same parts are given same reference numerals, to which "100" has been added.

In the shown embodiments, the pipeline installation system 1; 101 is provided on deck 3; 103 of a vessel 2; 102 for laying an offshore pipeline. The vessel 2; 102 comprises a moonpool 4; 104, in the shown embodiments covered by moonpool hatches 5a, 5b; 105a, 105b.

Not visible is a storage reel for storage of a flexible offshore pipeline to be installed. Both storage reels having a horizontal axis and a vertical axis are known in the art. It is equally conceivable that the storage reel is provided on deck, or below deck (for example in a so-called carousel), or even on a separate vessel.

On deck 3; 103 a pipeline launch tower 6; 106 is provided, which is adapted for launching a pipeline in a firing line 7; 107 along said pipeline launch tower 6; 106 through the moonpool 4; 104 into the sea. In the embodiments of fig. 1 and 2, the pipeline launch tower 6; 106 is mounted pivotable to said vessel about a horizontal pivot axis 8; 108. In fig. 2 is an adjusters 109 visible, provided between the deck 103 and the pipeline launch tower 106 to adjust the laying angle of the pipeline launch tower 106.

In both embodiments, the pipeline launch tower 6; 106 is embodied as an upstanding frame comprising two vertical beams 6a, 6b; 106a, 106b, interconnected at and upper end and a bottom end by horizontal beams 6c, 6d; 106c, 106d respectively.

At an elevated position of said pipeline launch tower 6; 106 a pipeline guide 10; 110 is supported, providing an arcuate guide surface in a vertical plane for guiding said pipeline in a pipeline launch trajectory from a storage reel into the firing line 7; 107. The pipeline guide 10 in fig. 1 is embodied as a semi-circular chute, while pipeline guide 110 in fig. 2 is embodied as a circular aligner wheel. In fig. 2 a guide support structure 111 is provided to support the pipeline guide 110, which guide support structure 111 is mounted movable, here pivotable about a horizontal pivot axis 11a to the pipeline launch tower 106, here to the upper beam 106c thereof, in particular a central area of the upper beam 106c. A guide support structure drive 111b, here embodied as hydraulic cylinders, is provided to allow adjustment of the position (orientation) of the guide support structure. In the shown embodiment the pipeline guide 110 is provided adjacent the firing line 107 in a pipelaying position. Upon actuation of the hydraulic cylinders 111b the pipeline guide 110 is movable away from the firing line.

In both embodiments of fig. 1 and fig. 2 the system is provided with one tensioner 20; 120 supported by the pipeline launch tower 6; 16 below said pipeline guide 10; 110. The tensioner comprises a tensioner frame 21; 121 and multiple tracks 22; 122 supported by said tensioner frame. In the shown configurations, the tracks 22; 122 are in a pipelaying position, wherein they are adapted to engage a pipeline in the firing line and to support at least part of the weight of a launched pipeline during launching the offshore pipeline. In alternative embodiments, not shown, two or even more tensioners are provided above one another.

In the embodiments of fig. 1 and fig. 2, the tensioner frame 21; 121 with tensioner tracks 22; 122 is supported via an associated support assembly 23; 123. This support assembly 23; 123 is adapted to allow for displacement of the tensioner frame 21; 121 with respect to the tower 6; 106 between the pipelaying position, as shown, and an end fitting passage position by a tensioner drive 24; 124, here embodied as hydraulic cylinders. In these embodiments, in the not-shown end fitting passage position, the tensioner frame is retracted between the beams 6a, 6b, 6c, 6d; 106a, 106b, 106c, 106d of the pipeline launch tower 6; 106, such that the firing line extends outside the frame of the tensioner. In alternative embodiments it is also conceivable that the tensioner frame 'opens' to allow the passage of an end fitting, in which embodiment it is still possible that the firing line is adjacent (a part of) the tensioner frame.

In the embodiments of fig. 1 and fig. 2, the installation 1; 101 further comprises an abandonment and recovery (A&R) system 25; 125 comprising at least one A&R cable 26 and associated A&R winch (not visible) and a sheave arrangement 27; 127 with one or more A&R sheaves 28a, 28b; 128a, 128b supported by the launch tower 6; 106 above said one or more tensioners. In particular, the A&R system is supported by the upper horizontal cross beam 6c, 106c of the pipeline launch tower, at a side thereof adjacent the pipeline guide which is provided essentially centrally.

According to the present invention, the marine reel lay method pipeline installation system 1; 101 is provided with an end fitting handling crane 30; 130. The end fitting handling crane 30; 130 comprises a pedestal 31; 131, mounted on a column 31a; 131a to an upper end of the pipeline launch tower, here to the upper horizontal cross beam 6c, 106c thereof. Column 131a is mounted via a cantilever beam 131b to the cross beam 106c. In the shown embodiments, the pipeline guide is provided in a central area of the upper horizontal cross beam, the A&R system at a side thereof and the end fitting handling crane at the opposed side thereof. A base 32; 132 is rotatably connected to the pedestal about a vertical rotation axis 33; 133. A base drive (not shown) is provided to rotate the base with respect to the pedestal.

A boom assembly is attached to the base 32; 132, comprising a main boom 34; 134 having an inner end which is pivotably connected to the base about a first horizontal pivot axis 35; 135, and a jib 36; 136 having an inner end which is pivotably connected to the main boom about a second horizontal pivot axis 37; 137. A main boom drive 38; 138, here embodied as two hydraulic cylinders is provided to pivot the main boom with respect to the base, and a jib drive 39; 139, also embodied as a hydraulic cylinder, is provided to effect the pivoting movements of the jib 36;136 with respect to the main boom 34; 134.

In the shown embodiments, as is preferred, the jib 36; 136 of the boom assembly is a telescopic jib comprising multiple jib parts 36a, 36b, 36c, 36d that fit into each other, such that the outer end of the jib is telescopable relative to the inner end of the jib. A telescope drive 40; 140 is provided to effect the telescoping movement of the telescopic jib.

In the shown embodiments, as is preferred, the end fitting handling crane further comprises a winch 141 (only visible in fig. 2) and a wire 42; 142 extending over a sheave 43; 143 at the outer end of the jib to a retainer 45; 145. The end fitting on the flexible pipeline is connectable to the retainer 45; 145, which is here thus embodied as a hook. In another, not shown embodiment, it is also conceivable that the end fitting handling crane is not provided with a winch and wire, and that the retainer is provided at an outer end of the jib 36; 136.

According to the present invention, a computerized crane control system 81; 181 is provided, advantageously at a position accessible to computer personnel, e.g. at the bridge or on deck of the vessel (as shown in the present example).

The computerized crane control system 81; 181 is linked to the base drive (not visible), the main boom drive 38; 138, the jib drive 39; 139, the telescope drive 40; 140, and the winch 141 to slew the base relative to the pedestal, to pivot the main boom relative to the base, to pivot the jib relative to the main boom, to telescope the outer end of the jib relative to the inner end of the jib and to haul and/or pay out the wire 42; 142. Hauling and paying out the wire 42; 142 enables the end fitting handling crane to pick up an end fitting from deck, and/ or to lower an end fitting at least partly in the firing line.

The computerized control system is programmed to perform a first routine providing a pattern of movements of the base 32; 132, main boom 34; 134 and jib 36; 136, the pattern extending between an end fitting pick up position wherein the outer end of the jib is arranged at a storage reel side of the pipeline guide and the firing line 7; 107. The routine automatically transfers an end fitting from the storage reel side 110b of the pipeline guide, over the pipeline guide 10; 110 via the firing line side 10a; 110a of the pipeline guide into the firing line 7; 107 in an end fitting trajectory.

Advantageously, the computerized crane control system 81; 181 comprises a memory (not shown) in which multiple routines with different patterns of movement are stored, and wherein a routine is selected on the basis of the command entered into the input device, such as the dimensions of the end fitting.

In the embodiment of fig. 1, the pipeline guide 10 guides a pipeline from a reel, positioned at a side of the pipeline launch tower opposite of the firing line 7. Hence, the storage reel side of the pipeline guide 10 is the non-visible side of the pipeline guide, opposite the firing line side 10a of the pipeline guide 10.

In the embodiment of fig. 2, the pipeline guide 110 guides a pipeline from a reel, positioned at the same side of the pipeline launch tower as the firing line 107. Hence, the storage reel side 110b of the pipeline guide 110 is at the right-hand part of the drawing, opposite the firing line side 110a of the pipeline guide 110.

According to the present invention, an input device 82; 182 is provided, which is linked to the computerized crane control system, and which is provided at a position remote from the upper end of the pipeline launch tower. The input device is adapted to receive a command to start the first routine of the computerized crane control system.

As explained above, in the embodiment of fig. 2 a guide support structure 111 is provided. According to a preferred embodiment of the present invention, the computerized crane control system 181 is further linked to the guide support structure drive 111b. A routine of the computerized control system advantageously includes adjusting the position of the guide support structure during transfer of the end fitting. For example, the guide support structure is moved away from the firing line once the end fitting has been transferred into the firing line, facilitating the lowering of the end fitting.

As explained above, the shown embodiments comprise displaceable tensioner frames 21; 121. According to a preferred embodiment of the present invention, the computerized crane control system 81; 181 is further linked to the tensioner drive 24; 124. A routine of the computerized control system advantageously includes displacing the tensioner frame 21; 121 to the end fitting passage position, e.g. to allow for lowering an end fitting in the firing line.

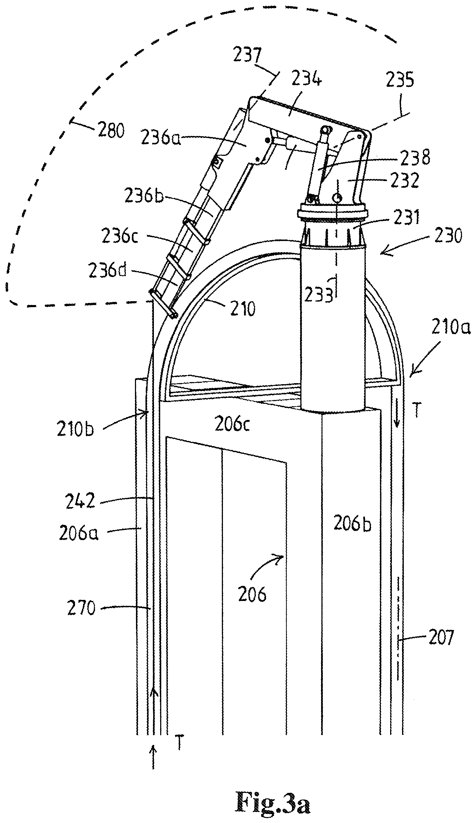

In figs. 3a-3g an third embodiment of a marine reel lay method pipeline installation system 201 for laying on the seabed a flexible offshore pipeline 270 comprising a second end fitting 271 connected thereto is show very schematically and only partially.

The pipeline installation system 201 comprises a pipeline launch tower 206, of which only an upper portion is shown. In particular comprises the pipeline launch tower 206 two parallel standing beams, interconnected at an upper end thereof by a horizontal crossbeam 206c. The pipeline launch tower in fig. 3a launches the pipeline 270 in a firing line 207 along said pipeline launch tower into the sea.

A pipeline guide 210, here embodied as a semi-circular chute, is supported at an elevated position of said pipeline launch tower 206. Here, the chute 210 is mounted to the horizontal crossbeam 206c of the tower. The pipeline guide 210 provides an arcuate guide surface in a vertical plane for guiding said pipeline 270 from a storage reel (not visible) into the firing line 207 in a transport direction T. The pipeline is launched by the operation of one or more tensioners provided in the firing line 207, which are not shown in figs. 3a-3g.

An end fitting handling crane 230 of figs. 3a-3g strongly resembles that of figs. 1 and 2, and is hence not discussed here in detail. Same parts are given same reference numerals, now increased by 200 or 100 to 200-series.

The end fitting handling crane 230 comprises a pedestal 231 mounted to an upper end of the pipeline launch tower, in particular to the horizontal crossbeam 206c of the tower, aside the centrally provided pipeline guide 210. The end fitting handling crane 230 comprises a base 232 which is rotatably connected to the pedestal 231 about a vertical rotation axis 233 with a base drive (not shown).

A boom assembly is attached to the base 232, comprising a main boom 234 having an inner end which is pivotably connected to the base about a first horizontal pivot axis 235, and a jib 236 having an inner end which is pivotably connected to the main boom about a second horizontal pivot axis 237. An accompanying main boom drive 238 and jib drive 239 are provided to effect the pivoting movements. The jib 236 is a telescopic jib comprising multiple jib segments 236a, 235b, 236c, 236d. The outer end of the jib is telescopable relative to the inner end of the tip by a telescope drive 240.

The end fitting handling crane 230 further comprises a winch (not visible) and a wire 242 extending over a sheave (not visible) at the outer end of the jib to a retainer 245, here highly schematically represented. The end fitting 271 on the flexible pipeline 270 is connectable to this retainer 245.

According to the present invention, a computerized crane control system (not shown) is provided at a position remote from the upper end of the pipeline launch tower. The computerized crane control system is linked to the base drive (not visible), the main boom drive 238, the jib drive 239, the telescope drive 240, and the winch (not visible) to slew the base relative to the pedestal, to pivot the main boom relative to the base, to pivot the jib relative to the main boom, to telescope the outer end of the jib relative to the inner end of the jib and to haul and/or pay out the wire 242.

According to the present invention, further an input device (not shown) is provided, which is linked to the computerized crane control system, and which is provided at a position remote from the upper end of the pipeline launch tower. The input device is adapted to receive a command to start the first routine of the computerized crane control system.

The computerized control system is programmed to perform a routine providing a pattern of movements of the base 232, main boom 234 and jib 236, the pattern extending between an end fitting pick up position wherein the outer end of the jib is arranged at a storage reel side of the pipeline guide and the firing line 207. The routine automatically transfers an end fitting from the storage reel side 210b of the pipeline guide, over the pipeline guide 210 via the firing line side 210a of the pipeline guide into the firing line 207. Furthermore, the computerized control system is programmable to perform hauling and paying out the wire 242, enabling the end fitting handling crane to pick up an end fitting from deck, and/ or to lower an end fitting at least partly in the firing line.

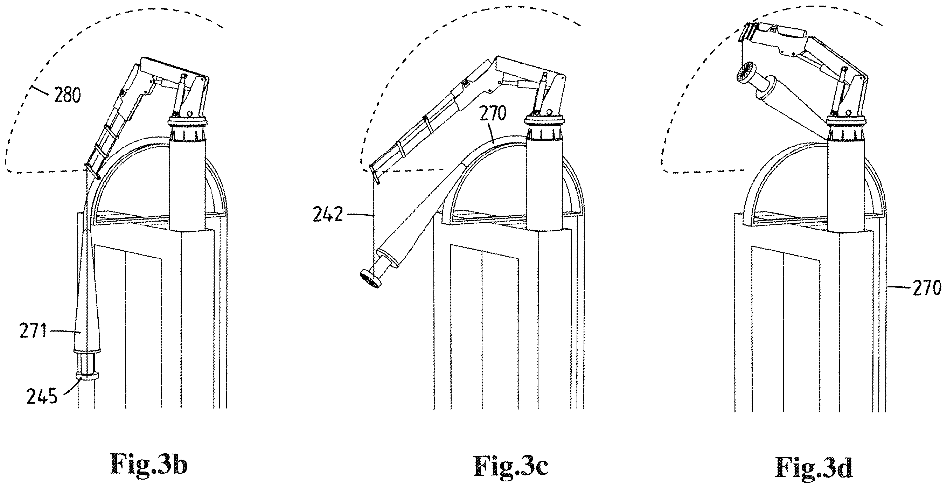

In figs. 3b-3g the transfer of a second trailing end fitting 271 on a flexible pipeline 270 in an end fitting trajectory 280 is shown in intermediate stages. In fig. 3a, as indicated above, the offshore pipeline 270 is being lowered into the sea from a storage reel (not visible) via pipeline guide 210, in particular from a storage reel side 210b to the firing line side 210a thereof, into the firing line 207. Launching is driven by tensioner tracks (not shown) engaging the pipeline and supporting at least part of the weight of the launched pipeline.

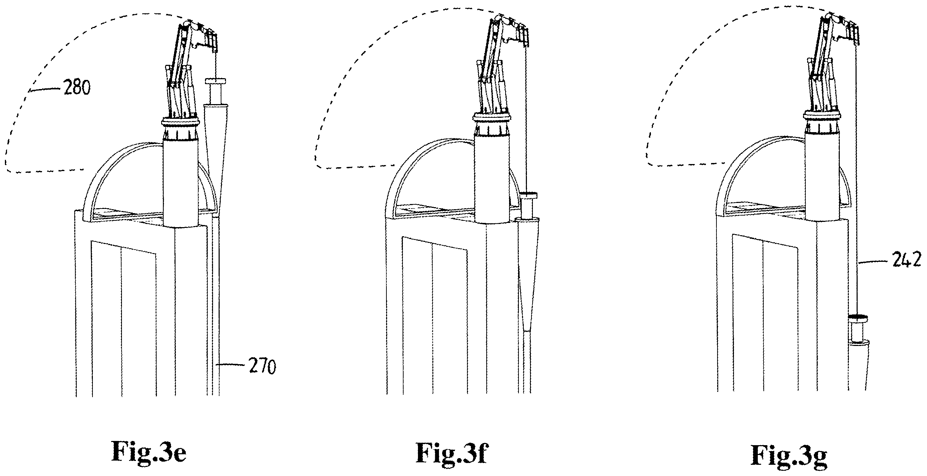

In figs. 3b, launching has continued by driving the tensioner tracks and thereby the second end fitting 271 is provided within reach of the retainer 245 at the end fitting pick up position as visible in fig. 3b. The second end fitting 271 is connected to the retainer 245. After a command has been entered into the input device (not shown), the second end fitting 271 is automatically transferred from the storage reel side 210b of the pipeline guide, over the pipeline guide, as visible in figs. 3c and 3d into the firing line, as visible in fig. 3e. Subsequently, the second end fitting 271 and the launched flexible pipeline 270 connected upstream thereof are lowered into the firing line 207, as visible in figs. 3f, 3g.

From the sequence of figs. 3a-3g follows that the computerized crane control system is advantageously programmed to perform simultaneous slewing of the base relative to the pedestal; and/ or pivoting of the main boom relative to the base; and/or pivoting of the jib relative to the main boom; and/ or telescoping of the telescopic jib, and/or hauling or paying out the wire with the retainer.

From the end fitting trajectory 280 of the shown embodiment follows that an arcuate movement over the pipeline guide is preceded by a horizontal translation away from the pipeline guide 210.

## Claims

1. Marine reel lay method pipeline installation system (1; 101; 201) for laying on the seabed a flexible offshore pipeline (270) comprising an end fitting (271) connected thereto, said system comprising:
- a pipeline launch tower (6; 106; 206), which is adapted for launching the pipeline in a firing line (7; 107; 207) along said pipeline launch tower into the sea,
- a pipeline guide (10; 110; 210) supported at an elevated position of said pipeline launch tower and providing an arcuate guide surface in a vertical plane for guiding said pipeline from a storage reel into the firing line,
- one or more tensioners (20; 120) supported by the pipeline launch tower below said pipeline guide, each tensioner comprising a tensioner frame (21; 121) and multiple tracks (22; 122) supported by said tensioner frame, said tracks in a pipelaying position being adapted to engage the pipeline in the firing line and to support at least part of the weight of a launched pipeline during launching the offshore pipeline,
- an end fitting handling crane (30; 130) comprising:
∘ a pedestal (31;131) mounted to an upper end of the pipeline launch tower;
∘ a base (32; 132) which is rotatably connected to the pedestal about a vertical rotation axis (33; 133) with a base drive;
∘ a boom assembly attached to the base, comprising a main boom (34; 134) having an inner end which is pivotably connected to the base about a first horizontal pivot axis (35; 135), and a jib (36; 136) having an inner end which is pivotably connected to the main boom about a second horizontal pivot axis (37; 137), and an accompanying main boom drive (38; 138; 238) and jib drive (39; 139; 239) to effect the pivoting movements;
∘ a retainer provided at an outer end of the jib to which the end fitting on the flexible pipeline is connectable;
- a computerized crane control system (81; 181; 281) linked to the base drive, the main boom drive and the jib drive, which is adapted to control the slewing of the base relative to the pedestal, the pivoting of the main boom relative to the base and the pivoting of the jib relative to the main boom;
which computerized control system is programmed to perform a first routine providing a pattern of movements of the base, main boom and jib, the pattern extending between an end fitting pick up position wherein the outer end of the jib is arranged at a storage reel side (110b; 210b) of the pipeline guide and the firing line;
to automatically transfer the end fitting from the storage reel side of the pipeline guide, over the pipeline guide into the firing line in an end fitting trajectory (280);
- an input device (82; 182; 282) linked to the computerized crane control system, which is provided at a position remote from the upper end of the pipeline launch tower, and which is adapted to receive a command to start the first routine of the computerized crane control system.

2. System according to claim 1, wherein the computerized crane control system (81; 181) comprises a memory in which multiple routines with different patterns of movement are stored, and wherein a routine is selected on the basis of the command entered into the input device, such as the dimensions of the end fitting.

3. System according to claim 1, wherein the jib (36; 136; 236) of the boom assembly is a telescopic jib, wherein the outer end of the jib is telescopable relative to the inner end of the jib by a telescope drive (40; 140; 240) to which the computerized crane control system is linked, and wherein a routine of the computerized crane control system includes telescoping of the jib.

4. System according to claim 1, wherein the end fitting handling crane further comprises a winch (141) and a wire (42; 142) extending over a sheave (43; 143) at the outer end of the jib to the retainer (45; 145), wherein the computerized crane control system is also linked to the winch and wherein a routine of the computerized crane control system includes hauling and/ or paying out the wire.

5. System according to claim 1, wherein the end fitting handling crane further comprises a load sensor measuring the force exerted by end fitting onto the retainer (45; 145), wherein the sensor is connected to the computerized crane control system and an output signal of the load sensor is used as input for a routine of the computerized crane control system.

6. System according to claim 1, wherein the installation further comprises a back tension sheave and/ or back tension winch that is to be mounted at a deck of the vessel, generally at the storage reel side of the pipeline launch tower, guiding a winch driven cable to be connected to anend fitting, and wherein the computerized crane control system is also linked to the back tension sheave and/or back tension winch and wherein a routine of the computerized crane control system in the transfer of an end fitting includes applying back tension.

7. System according to claim 1, wherein the installation further comprises a guide support structure (111) supporting the pipeline guide, which guide support structure is mounted movable to the pipeline launch tower, and wherein a guide support structure drive (111b) is provided to allow adjustment of the position of the guide support structure to move the pipeline guide towards and away from the firing line (107), and wherein the computerized crane control system (181) is further linked to the guide support structure drive, and wherein a routine of the computerized control system includes adjusting the position of the guide support structure during transfer of the end fitting.

8. System according to claim 1, wherein the at least one tensioner frame (21; 121) with tensioner tracks is supported via an associated support assembly (23; 123), the support assembly of one or more tensioner frames being adapted to allow for displacement of the tensioner frame with respect to the tower between the pipelaying position and an end fitting passage position by a tensioner drive (24; 124), and wherein the computerized crane control system is further linked to the tensioner drive, and wherein a routine of the computerized control system includes displacing the tensioner frame to the end fitting passage position.

9. System according to claim 1, wherein the installation further comprises an abandonment and recovery (A&R) system (25) comprising at least one A&R cable (26) and associated A&R winch and a sheave arrangement (27) with one or more A&R sheaves (28a, 28b; 128a, 128b) supported by the launch tower above said one or more tensioners, and wherein the computerized crane control system is further linked to the A&R winch, and wherein a routine of the computerized control system includes controlling the A&R winch.

10. Vessel for laying an offshore pipeline provided with a system according to any of claims 1 - 9.

11. Marine reel lay method for launching on the seabed a flexible offshore pipeline with one or two end fittings, wherein use is made of a system according to any of claims 1 - 9.

12. Marine reel lay method for laying on the seabed a flexible offshore pipeline comprising at least a second, trailing end fitting connected thereto, wherein use is made of a system according to claim 1, the method comprising the steps of:
- launching the offshore pipeline into the sea, from a storage reel via the pipeline guide into the firing line, with the tensioner tracks engaging the pipeline and supporting at least part of the weight of the launched pipeline;
- bringing the second end fitting within reach of a retainer at the end fitting pick up position;
- connecting the second end fitting to the retainer;
- entering a command into the input device of the computerized crane control system to automatically transfer the second end fitting from the storage reel side of the pipeline guide, over the pipeline guide into the firing line,
- lowering the second end fitting and the launched flexible pipeline connected upstream thereof into the firing line.

## Patentansprüche

1. Pipeline-Installationssystem (1; 101; 201) für ein Meeresspulenlegeverfahren zum Legen einer flexiblen Pipeline (270) auf offener See auf den Meeresgrund, welche ein Endanschlussstück (271) damit verbunden umfasst, wobei das System umfasst:
- einen Pipeline-Ausbringungsturm (6; 106; 206), welcher zum Ausbringen der Pipeline in einer Schusslinie (7; 107; 207) entlang dem Pipeline-Ausbringungsturm in das Meer ausgestaltet ist,
- eine Pipeline-Führung (10; 110; 210), welche an einer erhöhten Position von dem Pipeline-Ausbringungsturm gehalten wird und eine bogenförmige Führungsfläche in einer vertikalen Ebene zum Führen der Pipeline von einer Lagerrolle in die Schusslinie bereitstellt,
- eine oder mehrere Spannvorrichtungen (20; 120), welche von dem Pipeline-Ausbringungsturm unterhalb der Pipeline-Führung gehalten werden, wobei jede Spannvorrichtung einen Spannvorrichtungsrahmen (21; 121) und mehrere Führungen (22; 122), welche von dem Spannvorrichtungsrahmen gehalten werden, umfasst, wobei die Führungen in einer Rohrlegeposition ausgestaltet sind, sich mit der Pipeline in der Schusslinie in Eingriff zu befinden und zumindest einen Teil des Gewichts einer ausgebrachten Pipeline während eines Ausbringens der Pipeline auf offener See zu halten,
- einen Endanschlussstückhandhabungskran (30; 130) umfassend:
• einen Sockel (31; 131), welcher an einem oberen Ende des Pipeline-Ausbringungsturms angebracht ist;
• eine Basis (32; 132), welche mit dem Sockel um eine vertikale Drehachse (33; 133) drehbar verbunden ist, mit einem Basisantrieb;
• eine Auslegeranordnung, welche an der Basis angebracht ist, umfassend einen Hauptausleger (34; 134) mit einem inneren Ende, welches drehbar um eine erste horizontale Drehachse (35; 135) mit der Basis verbunden ist, und einen Ausleger (36; 136) mit einem inneren Ende, welches drehbar um eine zweite horizontale Drehachse (37; 137) mit dem Hauptausleger verbunden ist, und einen beigefügten Hauptauslegerantrieb (38; 138; 238) und einen Auslegerantrieb (39; 139; 239), um die Drehbewegungen zu bewirken;
• einen Halter, welcher an einem äußeren Ende des Auslegers vorgesehen ist, mit welchem das Endanschlussstück an der flexiblen Pipeline verbindbar ist;
- ein mit dem Basisantrieb, dem Hauptauslegerantrieb und dem Auslegerantrieb verbundenes rechnergestütztes Kransteuersystem (81; 181; 281), welches ausgestaltet ist, um das Schwenken der Basis relativ zu dem Sockel, das Drehen des Hauptauslegers relativ zu der Basis und das Drehen des Auslegers relativ zu dem Hauptausleger zu steuern;
wobei das rechnergestützte Steuersystem programmiert ist, eine erste Routine auszuführen, welche ein Muster von Bewegungen von der Basis, dem Hauptausleger und dem Ausleger bereitstellt, wobei sich das Muster zwischen einer Endanschlussstückaufnahmeposition, in welcher das äußere Ende des Auslegers an einer Lagerrollenseite (110b; 210b) der Pipeline-Führung angeordnet ist, und der Schusslinie erstreckt;
um das Endanschlussstück von der Lagerrollenseite der Pipeline-Führung über die Pipeline-Führung in die Schusslinie in eine Endanschlussstücktrajektorie (280) automatisch zu übertragen;
- eine mit dem rechnergestützten Kransteuersystem verbundene Eingabevorrichtung (82; 182; 282), welche an einer von dem oberen Ende des Pipeline-Ausbringungsturms entfernten Position vorgesehen ist und welche ausgestaltet ist, einen Befehl zu empfangen, um die erste Routine des rechnergestützten Kransteuersystems zu starten.

2. System nach Anspruch 1, wobei das rechnergestützte Kransteuersystem (81; 181) einen Speicher umfasst, in welchem mehrere Routinen mit unterschiedlichen Mustern von Bewegungen gespeichert sind, und wobei eine Routine auf der Grundlage des in die Eingabevorrichtung eingegebenen Befehls, wie zum Beispiel die Abmessungen des Endanschlussstücks, ausgewählt wird.

3. System nach Anspruch 1, wobei der Ausleger (36; 136; 236) der Auslegeranordnung ein ausziehbarer Ausleger ist, wobei das äußere Ende des Auslegers relativ zu dem inneren Ende des Auslegers mittels eines Ausziehantriebs (40; 140; 240), mit welchem das rechnergestützte Kransteuersystem verbunden ist, ausziehbar ist, und wobei eine Routine des rechnergestützten Kransteuersystems ein Ausziehen des Auslegers aufweist.

4. System nach Anspruch 1, wobei der Endanschlussstückhandhabungskran ferner eine Winde (141) und ein Kabel (42; 142) umfasst, welches sich über eine Rolle (43; 143) an dem äußeren Ende des Auslegers zu dem Halter (45; 145) erstreckt, wobei das rechnergestützte Kransteuersystem ferner mit der Winde verbunden ist und wobei eine Routine des rechnergestützten Kransteuersystems ein Einholen und/oder Ausgeben des Kabels aufweist.

5. System nach Anspruch 1, wobei der Endanschlussstückhandhabungskran ferner einen Lastsensor umfasst, welcher die Kraft misst, welche von dem Endanschlussstück auf den Halter (45; 145) ausgeübt wird, wobei der Sensor mit dem rechnergestützten Kransteuersystem verbunden ist und ein Ausgangssignal des Lastsensors als Eingabe für eine Routine des rechnergestützten Kransteuersystems verwendet wird.

6. System nach Anspruch 1, wobei die Installation ferner eine Rückspannungsrolle und/oder Rückspannungswinde umfasst, welche an einem Deck des Wasserfahrzeugs anzubringen ist, im Allgemeinen an der Lagerrollenseite des Pipeline-Ausbringungsturms, welche ein mit einem Endanschlussstück zu verbindendes windengetriebenes Kabel führen, und wobei das rechnergestützte Kransteuersystem ferner mit der Rückspannungsrolle und/oder der Rückspannungswinde verbunden ist und wobei eine Routine des rechnergestützten Kransteuersystems bei dem Übertragen von einem Endanschlussstück ein Anwenden einer Rückspannung aufweist.

7. System nach Anspruch 1, wobei die Installation ferner eine Führungshaltestruktur (111) aufweist, welche die Pipeline-Führung hält, wobei die Führungshaltestruktur beweglich an dem Pipeline-Ausbringungsturm angebracht ist, und wobei ein Führungshaltestrukturantrieb (111b) vorgesehen ist, um eine Einstellung der Position der Führungshaltestruktur zu ermöglichen, um die Pipeline-Führung in Richtung und weg von der Schusslinie (107) zu bewegen, und wobei das rechnergestützte Kransteuersystem (181) ferner mit dem Führungshaltestrukturantrieb verbunden ist, und wobei eine Routine des rechnergestützten Steuersystems ein Einstellen der Position der Führungshaltestruktur während eines Übertragens des Endanschlussstücks aufweist.

8. System nach Anspruch 1, wobei der mindestens eine Spannvorrichtungsrahmen (21; 121) mit Spannvorrichtungsführungen über eine zugeordnete Halteanordnung (23; 123) gehalten wird, wobei die Halteanordnung von einem oder mehreren Spannvorrichtungsrahmen ausgestaltet ist, ein Versetzen des Spannvorrichtungsrahmens bezogen auf den Turm zwischen der Rohrlegeposition und einer Endanschlussstückdurchgangsposition mittels eines Spannvorrichtungsantriebs (24; 124) zu ermöglichen, und wobei das rechnergestützte Kransteuersystem ferner mit dem Spannvorrichtungsantrieb verbunden ist, und wobei eine Routine des rechnergestützten Steuersystems ein Versetzen des Spannvorrichtungsrahmens zu der Endanschlussstückdurchgangsposition aufweist.

9. System nach Anspruch 1, wobei die Installation ferner ein Aufgabe- und Rückgewinnungssystem (25) (A&R) umfasst, welches zumindest ein A&R-Kabel (26) und eine zugeordnete A&R-Winde und eine Rollenanordnung (27) mit einer oder mehreren A&R-Rollen (28a, 28b; 128a, 128b) umfasst, welches von dem Ausbringungsturm über der einen oder den mehreren Spannvorrichtungen gehalten wird, und wobei das rechnergestützte Kransteuersystem ferner mit der A&R-Winde verbunden ist, und wobei eine Routine des rechnergestützten Steuersystems ein Steuern der A&R-Winde aufweist.

10. Wasserfahrzeug zum Legen einer Pipeline auf offener See, welches mit einem System nach einem der Ansprüche 1 bis 9 versehen ist.

11. Meeresspulenlegeverfahren zum Ausbringen einer flexiblen Pipeline mit einem oder mehreren Endanschlussstücken auf offener See auf den Meeresgrund, wobei ein System nach einem der Ansprüche 1 bis 9 verwendet wird.

12. Meeresspulenlegeverfahren zum Legen einer flexiblen Pipeline auf offener See auf den Meeresgrund, welche mindestens ein zweites hinteres Endanschlussstück damit verbunden umfasst, wobei ein System nach Anspruch 1 verwendet wird, wobei das Verfahren die Schritte umfasst:
- Ausbringen der Pipeline auf offener See von einer Lagerspule über die Pipeline-Führung in die Schusslinie in das Meer, wobei sich die Spannvorrichtungsführungen in Eingriff mit der Pipeline befinden und zumindest ein Teil des Gewichts der ausgebrachten Pipeline halten;
- Bringen des zweiten Endanschlussstücks in eine Reichweite eines Halters an der Endanschlussstückaufnahmeposition;
- Verbinden des zweiten Endanschlussstücks mit dem Halter;
- Eingeben eines Befehls in die Eingabevorrichtung des rechnergestützten Kransteuersystems, um das zweite Endanschlussstück von der Lagerrollenseite der Pipeline-Führung über die Pipeline-Führung in die Schusslinie automatisch zu übertragen;
- Absenken des zweiten Endanschlussstücks und der ausgebrachten damit oberhalb verbundenen flexiblen Pipeline in die Schusslinie.

## Revendications

1. Système d'installation de conduite pour procédé de pose de dévidoir marin (1 ; 101 ; 201) destiné à poser sur le fond marin une conduite en mer flexible (270) comprenant un raccord d'extrémité (271) relié à celui-ci, ledit système comprenant :
- une tour de lancement de conduite (6 ; 106 ; 206), qui est adaptée pour lancer la conduite dans une ligne de tir (7 ; 107 ; 207) le long de ladite tour de lancement de conduite dans la mer,
- un guide de conduite (10 ; 110 ; 210) supporté à un emplacement élevé de ladite tour de lancement de conduite et qui offre une surface de guidage arquée sur un plan vertical destinée à guider ladite conduite depuis un dévidoir de stockage dans la ligne de tir,
- un ou plusieurs dispositifs de tension (20; 120) supportés par la tour de lancement de conduite sous ledit guide de conduite, chaque dispositif de tension comprenant un châssis de dispositif de tension (21 ; 121) et plusieurs rails (22 ; 122) supportés par ledit châssis de dispositif de tension, lesdits rails dans une position de pose de conduite étant adaptés pour engager la conduite dans la ligne de tir et pour supporter au moins une partie du poids d'une conduite lancée pendant le lancement de la conduite en mer,
- un pont de manutention de raccord d'extrémité (30 ; 130) comprenant :
- un socle (31 ; 131) monté sur une extrémité supérieure de la tour de lancement de conduite ;
- une base (32 ; 132) qui est reliée de manière rotative au socle autour d'un axe de rotation vertical (33 ; 133) avec un entraînement de base ;
- un ensemble de flèche relié à la base, comprenant une flèche principale (34 ; 134) ayant une extrémité interne qui est reliée de manière pivotante à la base autour d'un premier axe de pivotement horizontal (35 ; 135), et un bras (36 ; 136) ayant une extrémité interne qui est reliée de manière pivotante à la flèche principale autour d'un second axe de pivotement horizontal (37 ; 137), et un entraînement de flèche principale (38 ; 138 ; 238) et un entraînement de bras (39 ; 139 ; 239) destiné à effectuer les mouvements de pivotement ;
- un système de retenue prévu au niveau d'une extrémité externe du bras et auquel le raccord d'extrémité situé sur la conduite flexible peut être relié ;
- un système de commande de pont informatisé (81 ; 181 ; 281) relié à l'entraînement de base, à l'entraînement de flèche principale, et à l'entraînement de bras, qui est adapté pour contrôler l'orientation de la base par rapport au socle, le pivotement de la flèche principale par rapport à la base et le pivotement du bras par rapport à la flèche principale ;
ledit système de commande informatisé étant programmé pour exécuter une première routine qui prévoit des mouvements de la base, de la flèche principale et du bras, lesdits mouvements s'étendant entre une position de collecte de raccord d'extrémité dans laquelle l'extrémité externe du bras est disposée au niveau d'un dévidoir (110b ; 210b) du guide de conduite et la ligne de tir ;
pour transférer automatiquement le raccord d'extrémité depuis le côté dévidoir du guide de conduite, sur le guide de conduite, dans la ligne de tir, sur une trajectoire du raccord d'extrémité (280) ;
- un dispositif d'entrée (82 ; 182 ; 282) relié au système de commande de pont informatisé, qui est prévu à un emplacement distant de l'extrémité supérieure de la tour de lancement de conduite, et qui est adapté pour recevoir une commande de lancement de la première routine du système de commande de pont informatisé.

2. Système selon la revendication 1, dans lequel le système de commande de pont informatisé (81 ; 181) comprend une mémoire dans laquelle plusieurs routines à mouvements différents sont stockées, et dans lequel une routine est choisie sur la base de la commande saisie sur le dispositif d'entrée, comme les dimensions du raccord d'extrémité.

3. Système selon la revendication 1, dans lequel le bras (36 ; 136 ; 236) de l'ensemble de flèche est un bras télescopique, dans lequel l'extrémité externe du bras est télescopique par rapport à l'extrémité interne du bras par un entraînement de télescope (40 ; 140 ; 240) auquel le système de commande de pont informatisé est relié, et dans lequel une routine du système de commande de pont informatisé comprend un télescopage du bras.

4. Système selon la revendication 1, dans lequel le pont de manutention de raccord d'extrémité comprend en outre un treuil (141) et un câble (42 ; 142) qui s'étend sur une poulie (43 ; 143) au niveau de l'extrémité externe du bras jusqu'au système de retenue (45; 145), dans lequel le système de commande de pont informatisé est également relié au treuil, et dans lequel une routine du système de commande de pont informatisé comprend le hissage et/ou le déroulage du câble.

5. Système selon la revendication 1, dans lequel le pont de manutention de raccord d'extrémité comprend en outre un capteur de charge qui mesure la force exercée par le raccord d'extrémité sur le système de retenue (45 ; 145), dans lequel le capteur est relié au système de commande de pont informatisé et un signal de sortie du capteur de charge est utilisé comme entrée pour une routine du système de commande de pont informatisé.

6. Système selon la revendication 1, dans lequel l'installation comprend en outre une poulie de contre-tension et/ou un treuil de contre-tension à monter sur le pont d'un navire, généralement au niveau du côté dévidoir de la tour de lancement de conduite, afin de guider un câble entraîné par un treuil à relier à un raccord d'extrémité, et dans lequel le système de commande de pont informatisé est également relié à la poulie de contre-tension et/ou au treuil de contre-tension, et dans lequel une routine du système de commande de pont informatisé pendant le transfert d'un raccord d'extrémité comprend l'application d'une contre-tension.

7. Système selon la revendication 1, dans lequel l'installation comprend en outre une structure de support de guide (111) qui supporte le guide de conduite, ladite structure de support de guide étant montée de manière mobile sur la tour de lancement de conduite, et dans lequel un entraînement de structure de support de guide (111b) est prévu afin de permettre le réglage de la position de la structure de support de guide de façon à déplacer le guide de conduite vers et à l'écart de la ligne de tir (107), et dans lequel le système de commande de pont informatisé (181) est en outre relié à l'entraînement de structure de support de guide, et dans lequel une routine du système de commande de pont informatisé comprend le réglage de la position de la structure de support de guide pendant le transfert du raccord d'extrémité.

8. Système selon la revendication 1, dans lequel le au moins un châssis de dispositif de tension (21 ; 121) avec des rails de dispositif de tension est supporté via un ensemble de support associé (23 ; 123), l'ensemble de support d'un ou plusieurs châssis de dispositifs de tension étant adapté pour permettre le déplacement du châssis de dispositif de tension par rapport à la tour entre la position de pose de conduite et une position de passage de raccord d'extrémité à l'aide d'un entraînement de dispositif de tension (24; 124), et dans lequel le système de commande de pont informatisé est en outre relié à l'entraînement de dispositif de tension, et dans lequel une routine du système de commande de pont informatisé comprend le déplacement du châssis de dispositif de tension dans la position de passage de raccord d'extrémité.

9. Système selon la revendication 1, dans lequel l'installation comprend en outre un système d'abandon et de récupération (A&R) (25) comprenant au moins un câble d'abandon et de récupération (26) et un ensemble de treuil et de poulie d'abandon et de récupération associé (27) avec une ou plusieurs poulies d'abandon et de récupération (28a, 28b; 128a, 128b) supportées par la tour de lancement autour dudit ou desdits dispositifs de tension, et dans lequel le système de commande de pont informatisé est en outre relié au treuil d'abandon et de récupération, et dans lequel une routine du système de commande de pont informatisé comprend le contrôle du treuil d'abandon et de récupération.

10. Navire destiné à poser une conduite en mer munie d'un système selon l'une quelconque des revendications 1 à 9.

11. Procédé de pose de dévidoir marin destiné à lancer sur le fond marin une conduite en mer flexible ayant un ou deux raccords d'extrémité, dans lequel un système selon l'une quelconque des revendications 1 à 9 est utilisé.

12. Procédé de pose de dévidoir marin destiné à poser sur le fond marin une conduite en mer flexible comprenant au moins un second raccord d'extrémité arrière relié à celui-ci, dans lequel un système selon la revendication 1 est utilisé, le procédé comprenant les étapes consistant à :
- lancer la conduite en mer dans la mer, depuis un dévidoir de stockage via le guide de conduite dans la ligne de tir, avec les rails de dispositifs de tension engageant la conduite et supportant au moins une partie du poids de la conduite lancée ;
- amener le second raccord d'extrémité à portée d'un système de retenue dans la position de collecte du raccord d'extrémité ;
- relier le second raccord d'extrémité au système de retenue ;
- saisir une commande sur le dispositif d'entrée du système de commande de pont informatisé afin de transférer automatiquement le second raccord d'extrémité depuis le côté dévidoir de stockage du guide de conduite, sur le guide de conduite, dans la ligne de tir,
- abaisser le second raccord d'extrémité et la conduite flexible lancée reliée en amont de celui-ci dans la ligne de tir.
